(19) Europäisches Patentamt / European Patent Office / Office européen des brevets

(11) **EP 3 048 307 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(51) Int Cl.:
*F04D 25/02* *(2006.01)*  *F01P 7/04* *(2006.01)*
*F04D 25/06* *(2006.01)*  *F04D 27/00* *(2006.01)*

(21) Anmeldenummer: **16151537.4**

(22) Anmeldetag: **15.01.2016**

(54) **VERFAHREN ZUR REGELUNG EINER DREHZAHL EINES LÜFTERRADS**

METHOD FOR CONTROLLING A ROTATIONAL SPEED OF A FAN

PROCEDE DE REGLAGE D'UNE VITESSE D'UN VENTILATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2015 DE 102015200856**

(43) Veröffentlichungstag der Anmeldung:
**27.07.2016 Patentblatt 2016/30**

(73) Patentinhaber: **Mahle International GmbH 70376 Stuttgart (DE)**

(72) Erfinder:
• **Schultheiß, Gerold 75173 Pforzheim (DE)**
• **Spies, Alexander 70499 Stuttgart (DE)**

(74) Vertreter: **BRP Renaud & Partner mbB Rechtsanwälte Patentanwälte Steuerberater Königstraße 28 70173 Stuttgart (DE)**

(56) Entgegenhaltungen:
**DE-A1-102012 216 337    US-A1- 2012 255 714 US-A1- 2013 298 881**

EP 3 048 307 B1

**Beschreibung**

Die Erfindung betrifft ein Verfahren zur Regelung einer Drehzahl eines Lüfterrades eines Lüfters auf eine Soll-Drehzahl, das gemeinsam durch einen ersten Antrieb und einen zweiten Antrieb angetrieben wird, wobei der erste Antrieb durch eine erste Regeleinheit geregelt und/oder gesteuert wird und der zweite Antrieb durch eine zweite Regeleinheit geregelt und/oder gesteuert wird.

Aus der DE10219872 A1 ist ein Lüfterantrieb mit Flüssigkeitsreibungskupplung und zusätzlichem elektrischen Antrieb bekannt. Die dort offenbarte Regelung beschränkt sich auf die Ausregelung der Regelabweichung zwischen geforderter Soll-Drehzahl und aktueller Lüfterraddrehzahl. Dadurch können die Vorteile des kombinierten Lüfterantriebs nicht vollständig ausgenutzt werden.

Der vorliegenden Erfindung liegt die Aufgabe zu Grunde, eine verbesserte oder zumindest andere Ausführungsform eines Verfahrens zur Regelung einer Drehzahl eines Lüfterrades, welches durch zwei Antriebe angetrieben wird, anzugeben, die sich insbesondere durch einen verbesserten Wirkungsgrad auszeichnet.

Diese Aufgabe wird erfindungsgemäß durch die unabhängigen Ansprüche gelöst. Vorteilhafte Weiterbildungen sind Gegenstand der abhängigen Ansprüche.

Die Erfindung beruht auf dem allgemeinen Gedanken, eine wirkungsgradoptimierte Leistungsverzweigung zwischen dem ersten Antrieb und dem zweiten Antrieb zu ermöglichen. Dies wird dadurch erreicht, dass anhand einer Effizienzstrategie ein vom dem ersten Antrieb zur erzeugendes erstes Drehmoment und ein von dem zweiten Antrieb zu erzeugendes zweites Drehmoment bestimmt werden, dass jeweils ausgehend von dem ersten Drehmoment und von dem zweiten Drehmoment eine erste virtuelle Soll-Drehzahl und eine zweite virtuelle Soll-Drehzahl bestimmt werden, und dass die erste virtuelle Soll-Drehzahl der ersten Regeleinheit als eine Eingangsgröße zugeführt wird und dass die zweite virtuelle Soll-Drehzahl der zweiten Regeleinheit als Eingangsgröße zugeführt wird. Durch die Effizienzstrategie wird das zur Erreichung der Soll-Drehzahl des Lüfterrades benötigte Drehmoment auf den ersten Antrieb und den zweiten Antrieb aufgeteilt, derart, dass der Gesamtwirkungsgrad verbessert ist. Da die erzeugten Drehmomente nicht als Messgröße vorliegen, werden anhand der zu erzeugenden Drehmomente virtuelle Soll-Drehzahlen bestimmt. Diese virtuellen Soll-Drehzahlen werden den Regeleinheiten zugeführt, welche dann mit Hilfe der in den Regeleinheiten hinterlegten Vorsteuerkernfeldern die notwendigen Steuergrößen für die jeweiligen Antriebe ermitteln, und die Antriebe entsprechend steuern. Auf diese Weise wird die gewünschte, für den Wirkungsgrad optimierte, Leistungsverteilung zwischen den beiden Antrieben, annähernd erzielt. Beim Halten der Drehzahl des Lüfterrades auf die Soll-Drehzahl weichen die Regeleinheiten nach einer Einschwingphase nicht wesentlich von den aufgrund der Vorsteuerkernfelder bestimmten Steuergrößen ab, sodass auch im andauernden Betrieb die wirkungsgradoptimierte Leistungsaufteilung zwischen dem ersten Antrieb und dem zweiten Antrieb zumindest annähernd erhalten bleibt.

In der Beschreibung und den beigefügten Ansprüchen wird unter einer virtuellen Drehzahl ein Wert verstanden, der nur als Hilfsgröße verwendet wird. Beispielsweise sind virtuelle Solldrehzahlen Werte, die tatsächlich gar nicht erreicht werden sollen. Entsprechend sind virtuelle Ist-Drehzahlen nicht im System vorhanden. Die virtuellen Drehzahlen zeigen den Regeleinheiten Betriebszustände an, die tatsächlich nicht vorhanden sind, um die gewünschten Drehmomentverteilungen zwischen den beiden Antrieben zu erzielen.

Eine günstige Möglichkeit sieht vor, dass ein Elektromotor als erster Antrieb und eine Viscokupplung als zweiter Antrieb verwendet werden, welche das Lüfterrad an eine Welle der Brennkraftmaschine ankoppelt. Dadurch können die Vorteile des Elektromotors und der Viscokupplung gut miteinander kombiniert werden. Insbesondere kann die hohe Dynamik des Elektromotors genutzt werden, um ein schnelles Erreichen der Soll-Drehzahl zu ermöglichen. Des Weiteren sind die Wirkungsgradkennlinien der beiden Antriebe unterschiedlich, sodass durch eine Leistungsaufteilung zwischen den beiden Antrieben eine Optimierung des Gesamtwirkungsgrades erzielt werden kann. Beispielsweise übernimmt an einem Arbeitspunkt, an dem der eine Antrieb effizienter ist, dieser den Antrieb des Lüfterrades ganz oder zumindest zu einem größeren Teil als der andere weniger effiziente Antrieb.

Eine weitere günstige Möglichkeit sieht vor, dass die von dem ersten Antrieb und von dem zweiten Antrieb zu erzeugenden Drehmomente durch die Effizienzstrategie anhand einer Soll-Drehzahl des Lüfterrades und/oder einer Drehzahl einer Welle der Brennkraftmaschine bestimmt werden. Der Wirkungsgrad der Viscokupplung ist beispielsweise unter anderem abhängig von der Differenz zwischen der Drehzahl der Welle der Brennkraftmaschine und der Drehzahl des Lüfterrades, beispielsweise ist bei hohen Differenzen die Schlupfleistung der Viscokupplung größer, sodass der Wirkungsgrad der Viscokupplung kleiner ist. Der Wirkungsgrad des elektrischen Antriebs ergibt sich aus der Wirkungsgradkette umfassend die Wirkungsgrade des Elektromotors, der Leitungen, der Endstufe der Motorsteuerung sowie des Generators. Anhand der Soll-Drehzahl des Lüfterrades und der Drehzahl der Welle der Brennkraftmaschine kann also bestimmt werden, in welchem Verhältnis die Leistung der beiden Antriebe aufgeteilt werden muss, um einen optimalen Wirkungsgrad zu bestimmen.

Eine besonders günstige Möglichkeit sieht vor, dass die von dem ersten Antrieb und von dem zweiten Antrieb zu erzeugenden Drehmomente durch die Effizienzstrategie unter Berücksichtigung der Wirkungsgrade des ersten Antriebs und des zweiten Antriebs bestimmt werden. Somit ist es möglich, den Gesamtwirkungsgrad beim Antreiben des Lüfterrades zu optimieren.

Eine vorteilhafte Lösung sieht vor, dass die erste virtuelle Soll-Drehzahl und die zweite virtuelle Soll-Drehzahl mit Hilfe einer Drehzahl-Drehmoment-Kennlinie des Lüfterrades aus dem ersten Drehmoment bzw. dem zweiten Drehmoment bestimmt werden. Anhand der bekannten Drehzahl-Drehmoment-Kennlinie, kurz Kennlinie, kann ermittelt werden, welche Drehzahl das Lüfterrad erreichen würde, wenn das Lüfterrad mit dem ersten bzw. mit dem zweiten Drehmoment angetrieben wird. Wird diese Drehzahl als erste Soll-Drehzahl bzw. zweite virtuelle Soll-Drehzahl verwendet, werden aufgrund der Vorsteuerkennfelder in den Regeleinheiten die beiden Antriebe, welche versuchen die virtuellen Drehzahlen zu erreichen, gerade das erste Drehmoment bzw. das zweite Drehmoment erzeugen. Somit kann, obwohl die erzeugten Drehmomente der Antriebe nicht als Messgröße vorliegen eine Aufteilung der Drehmomente erzielt werden.

Eine weitere vorteilhafte Lösung sieht vor, dass die erste Regeleinheit und die zweite Regeleinheit jeweils ein Vorsteuerkennfeld und einen PID-Regler verwenden. Diese Art der Regeleinheiten hat sich bewährt und ermöglicht eine schnelle und effiziente Regelung der Drehzahl des Lüfterrades.

In der Beschreibung und den beigefügten Ansprüchen wird unter einem PID-Regler ein Proportional-Integral-Differenzial-Regler verstanden.

Eine besonders vorteilhafte Lösung sieht vor, dass die erste virtuelle Drehzahl als Eingangsgröße für das Vorsteuerkennfeld der ersten Regeleinheit des ersten Antriebs verwendet wird und dass die zweite virtuelle Soll-Drehzahl als Eingangsgröße für das Vorsteuerkennfeld der zweiten Regeleinheit des zweiten Antriebs verwendet wird. Durch die Verwendung der virtuellen Soll-Drehzahl als Eingangsgröße für die Vorsteuerkennfelder der Regeleinheiten werden aus den Vorsteuerkennfeldern gerade die Steuergrößen für die jeweiligen Antriebe bestimmt, welche notwendig sind, um die virtuellen Soll-Drehzahlen zu erreichen, also die Steuergrößen, die das erste Drehmoment bzw. das zweite Drehmoment durch die jeweiligen Antriebe erzeugen.

Eine günstige Variante sieht vor, dass die Regelabweichung, welche von den PID-Reglern verwendet wird, aus einer Differenz zwischen der Drehzahl des Lüfterrades und der Soll-Drehzahl des Lüfterrades bestimmt wird. Auf diese Weise kann erzielt werden, dass die Regeleinheiten auf die richtige Soll-Drehzahl regeln, obwohl den Regeleinheiten die virtuellen Drehzahlen als Eingangsgröße zugeführt werden.

Eine weitere günstige Variante sieht vor, dass die jeweiligen Regelabweichungen, welche von den PID-Reglern verwendet werden, aus einer Differenz zwischen der jeweiligen virtuellen Soll-Drehzahl und einer jeweiligen virtuellen Ist-Drehzahl bestimmt werden. Die jeweiligen virtuellen Ist-Drehzahlen werden aus der Drehzahl des Lüfterrades in gleicher Weise gebildet wie die virtuellen Soll-Drehzahlen aus der Soll-Drehzahl, sodass bei einer Übereinstimmung der Drehzahl des Lüfterrades mit der Soll-Drehzahl auch die virtuellen Soll-Drehzahlen mit den virtuellen Ist-Drehzahlen übereinstimmen. Dadurch kann erreicht werden, dass die erste Regeleinheit und die zweite Regeleinheit das Lüfterrad auf die gewünschte Soll-Drehzahl regeln.

Eine besonders günstige Variante sieht vor, dass die jeweiligen virtuellen Ist-Drehzahlen durch Subtraktion eines Offsets von der Drehzahl bestimmt werden, wobei das Offset die Differenz zwischen der Soll-Drehzahl und der jeweiligen virtuellen Soll-Drehzahl ist. Dadurch können durch einfache Addition- bzw. Subtraktionsrechnungen die virtuellen Ist-Drehzahlen bestimmt werden. Es ist also nur ein geringer Rechenaufwand notwendig.

Eine vorteilhafte Möglichkeit sieht vor, dass die virtuellen Ist-Drehzahlen durch Multiplikation der Drehzahlen mit einem Teilungsfaktor bestimmt werden, wobei der Teilungsfaktor der Quotient aus der jeweiligen virtuellen Soll-Drehzahl durch die Soll-Drehzahl ist. Auf diese Weise kann erreicht werden, dass derjenige Antrieb, welcher eine geringere Teilleistung leisten soll auch weniger stark an der Regelung der Drehzahl des Lüfterrades beteiligt ist, da durch die Multiplikation mit dem Teilungsfaktor entsprechend auch die Größe der Regelabweichung im Verhältnis zu der Leistungsaufteilung auf die jeweiligen Regeleinheiten aufgeteilt wird.

Eine vorteilhafte Lösung sieht vor, dass die erste Regeleinheit und die zweite Regeleinheit Drehzahlregeleinheiten sind, bzw. dass als erste Regeleinheit und als zweite Regeleinheit jeweils Drehzahlregeleinheiten verwendet werden. Drehzahlen können sehr leicht gemessen werden, so dass die Verwendung von Drehzahlregeleinheiten günstiger umzusetzen ist, als die Verwendung von Drehmomentregeleinheiten.

Eine weitere vorteilhafte Lösung sieht vor, dass die Drehzahlen des ersten Antriebs und des zweiten Antriebs gekoppelt sind. Der erste Antrieb und der zweite Antrieb können sich also nicht unabhängig voneinander drehen.

Ferner wird die oben genannte Aufgabe durch ein Kraftfahrzeug mit einem Lüfter, der durch einen ersten Antrieb und durch einen zweiten Antrieb angetrieben ist gelöst, wobei eine Drehzahl mindestens eines Lüfterrades des Lüfters durch ein Verfahren gemäß der vorstehenden Beschreibung geregelt ist. Die Vorteile des Verfahrens übertragen sich somit auf das Kraftfahrzeug, auf deren vorstehende Beschreibung insoweit Bezug genommen wird.

Eine besonders günstige Variante sieht vor, dass der erste Antrieb ein Elektromotor ist und der zweite Antrieb eine Viscokupplung ist, welche das Lüfterrad an eine Brennkraftmaschine des Kraftfahrzeugs koppelt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch.

Fig. 1    eine Prinzipskizze einer Anordnung umfassen eine Brennkraftmaschine und einen Lüfter mit einem ersten und einem zweiten Antrieb,

Fig. 2    ein Ablaufdiagramm eines Verfahrens zur Regelung einer Drehzahl eines Lüfterrades des Lüfters,

Fig. 3    eine Prinizipskizze einer Anordnung umfassend eine Brennkraftmaschine und einen Lüfter mit einem ersten und einem zweiten Antrieb, und

Fig. 4    ein Ablaufdiagramm eines Verfahrens zur Regelung der Drehzahl des Lüfterrades aus Fig. 3 gemäß einer zweiten Ausführungsform.

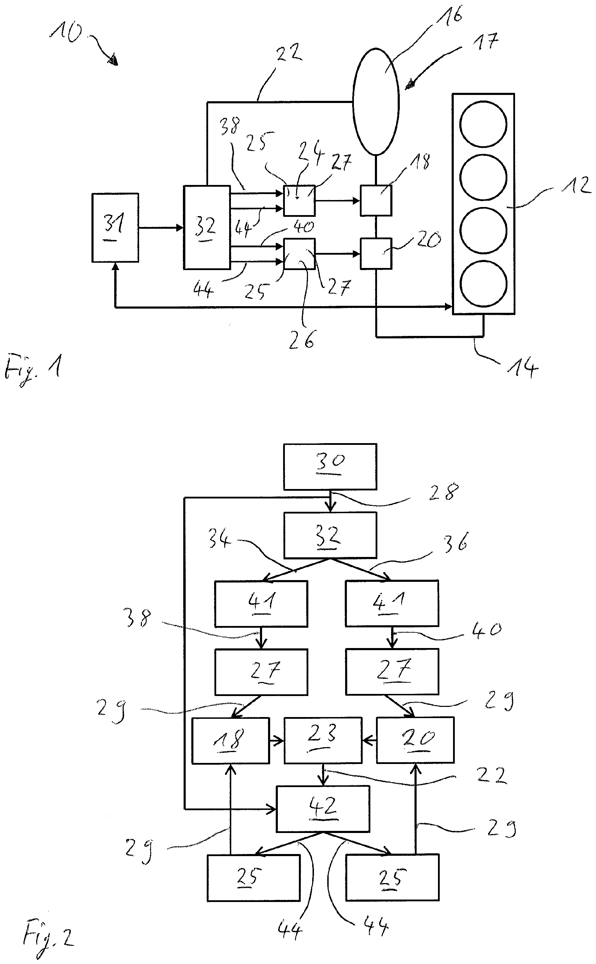

Eine in Fig. 1 dargestellte Anordnung 10 umfasst eine Brennkraftmaschine 12 mit einer Welle 14. Ferner umfasst die Anordnung einen Lüfter 16 mit mindestens einem Lüfterrad 17, welcher beispielsweise zur Kühlung der Brennkraftmaschine 12 eingesetzt wird. Und durch einen ersten Antrieb 18 und durch einen zweiten Antrieb 20 angetrieben wird.

Der erste Antrieb 18 und der zweite Antrieb 20 unterscheiden sich, beispielsweise ist der erste Antrieb ein Elektromotor und der zweite Antrieb eine Viscokupplung, welche das Lüfterrad 17 mit der Welle 14 der Brennkraftmaschine 12 koppelt, sodass die Drehung der Welle 14 der Brennkraftmaschine 12 auf eine Drehung des Lüfterrades 17 übertragen wird.

Um eine Drehzahl 22 des Lüfterrades 17 zu regeln weist der erste Antrieb 18 eine erste Regeleinheit 24 und der zweite Antrieb 20 eine zweite Regeleinheit 26 auf. Die erste Regeleinheit 24 und die zweite Regeleinheit 26 regeln die Leistung des ersten Antriebs 18 bzw. des zweiten Antriebs 20 derart, dass sich die Drehzahl 22 des Lüfterrades 17 einer Soll-Drehzahl 28 zumindest annähert. Die Messung 23 der Drehzahl 22 kann beispielsweise durch einen Drehzahlmesser erfolgen.

Die Regeleinheiten 24, 26 weisen jeweils einen PID-Regler 25 (Proportional-Integral-Differenzial-Regler) und ein Vorsteuerkennfeld 27 auf. Ferner sind in dem Vorsteuerkennfeld 27 Steuergrößen 29 für die jeweiligen Antriebe hinterlegt, welche für bestimmte Betriebspunkte des Lüfters 16 notwendig sind. Beispielsweise sind Steuergrößen 29 für den stationären Betrieb abhängig von der Drehzahl 22 des Lüfterrades 17 hinterlegt. Bei Einstellen einer Soll-Drehzahl 28 an den Regeleinheiten 24, 26 kann mit Hilfe der Vorsteuerkennfelder 27 eine erste gute Schätzung für die richtigen Steuergrößen 29 für die Antriebe bestimmt werden, sodass die Annäherung an die tatsächlich benötigen Steuergrößen 29 schneller stattfinden kann.

Eine Bestimmung 30 der Soll-Drehzahl 28 des Lüfterrades 17 erfolgt beispielsweise durch ein Motorsteuergerät 31, insbesondere anhand einer Temperatur der Brennkraftmaschine 12 oder einer Temperatur eines Kühlmediums, wie beispielsweise Wasser. Bei hohen Temperaturen werden höhere Soll-Drehzahlen gesetzt, um eine bessere Kühlung zu erhalten.

Um einen möglichst guten Wirkungsgrad zu erzielen, wird eine Effizienzstrategie 32 angewendet. Die beiden Antriebe 18, 20 weisen unterschiedliche Wirkungsgrade insbesondere unterschiedliche Abhängigkeiten der Wirkungsgrade, beispielsweise von der Drehzahl oder des zu erzeugenden Drehmoments auf. Aus diesem Grund ist eine Leistungsaufteilung, welche für den Gesamtwirkungsgrad vorteilhaft ist, für verschiedene Betriebspunkte unterschiedlich. Dabei können verschiedene Fälle auftreten. In den zwei einfachsten Fällen übernimmt einer der Antriebe komplett das Antreiben des Lüfterrades 17, während der andere Antrieb keine Leistung erzeugt. Es gibt aber auch Fälle, bei denen eine Aufteilung der Leistungen für den Wirkungsgrad günstig ist, bei denen beide Antriebe 18, 20 zum Antreiben des Lüfterrades 17 beisteuern.

Der erste Antrieb 18 und der zweite Antrieb 20 treiben gemeinsam das Lüfterrad 17 an, sodass die Drehzahlen des ersten Antriebs 18 und des zweiten Antriebs 20 miteinander gekoppelt sind. Insbesondere sind die Drehzahlen des ersten Antriebs 18 und des zweiten Antriebs 20 gleich der Drehzahl 22 des Lüfterrades 17. Um eine Leistungsaufteilung zu erreichen, muss also das Drehmoment, welches notwendig ist um das Lüfterrad 17 anzutreiben auf die beiden Antriebe aufgeteilt werden. Der erste Antrieb 18 muss ein erstes Drehmoment 34 und der zweite Antrieb 20 muss ein zweites Drehmoment 36 aufbringen, um das Lüfterrad 17 auf die gewünschte Soll-Drehzahl 28 zu bringen.

Für die Regelung der Drehzahl 22 des Lüfterrades 17 ist es allerdings problematisch, da die Drehmomente 34, 36, welche von den beiden Antrieben 18, 20, erzeugt werden nicht als Messgröße vorliegen und somit nicht als Regelgröße verwendet werden können.

Das erste Drehmoment 34 und das zweite Drehmoment 36 werden in eine erste virtuelle Soll-Drehzahl 38 und eine zweite virtuelle Soll-Drehzahl 40 umgerechnet und als Eingangsgröße für die erste Regeleinheit 24 und die zweite Regeleinheit 26 verwendet.

Die Bestimmung der virtuellen Soll-Drehzahlen 38, 40 aus den Drehmomenten 34, 36 erfolgt mit Hilfe einer Drehmoment-Drehzahl-Kennlinie, kurz Kennlinie 41, des Lüfterrades 17. Diese Kennlinie 41 kann beispielsweise theoretisch aus der Geometrie des Lüfters 16 abgeleitet werden oder experimentell ermittelt werden. Aus der Kennlinie 41 sind die Drehmomente bekannt, welche notwendig sind, um das Lüfterrad 17 auf einer bestimmten Drehzahl zu halten.

Entsprechend können aus der Kennlinie 41 die virtuellen Soll-Drehzahlen 38, 40 ermittelt werden, welche sich einstellen würden, wenn die beiden Antriebe 18, 20 mit dem aufgrund von der Effizienzstrategie 32 bestimmten ersten Drehmoment 34 und zweiten Drehmoment 36 das Lüfterrad 17 jeweils alleine antreiben würden.

Die virtuellen Drehzahlen 38, 40 werden als Eingangsgröße an die Regeleinheiten 24, 26 geleitet. In den Regeleinheiten 24 und 26 werden mit Hilfe der Vorsteuerkennfelder 27 die Steuergrößen 29 für die Antriebe 18, 20 bestimmt, die benötigt werden, um die Drehzahl 22 des Lüfterrades 17 auf den jeweiligen virtuellen Soll-Drehzahlen 38, 40 zu halten. Diese Steuergrößen 29 bewirken, dass die Antriebe 18, 20 die durch die Effizienzstrategie 32 bestimmten Drehmomente 34, 36 erzeugen. Somit erzeugen die beiden Antriebe 18 und 20 zu Beginn der Regelschleife das erste Drehmoment 34 und das zweite Drehmoment 36 genau in dem Verhältnis, das anhand der Effizienzstrategie 32 bestimmt wurde.

Zu Beginn der Regelschleife erfolgt eine Bestimmung 42 der Regelabweichung 44. Da den Regeleinheiten 24 und 26 virtuelle Soll-Drehzahlen 38, 40 zugeführt werden kann die Bestimmung 42 der Regelabweichung 44 nicht in der üblichen Art und Weise erfolgen, da ansonsten die beiden Antriebe 18, 20 jeweils auf eine unterschiedliche Drehzahl regeln würden, sodass die beiden Antriebe 18, 20 gegeneinander arbeiten würden.

Die Bestimmung 42 der Regelabweichung 44 erfolgt daher durch die Bildung der Differenz zwischen der Soll-Drehzahl 28 und der Drehzahl 22 des Lüfterrades 17. Die Regelabweichung 44 wird dann beiden Regeleinheiten 24, 26 bereitgestellt, sodass die PID-Regler 25 der Regeleinheiten 24, 26 keine eigene Bestimmung 42 der Regelabweichung 44 durchführen müssen.

Durch die Regelung des ersten Antriebs 18 und des zweiten Antriebs 20 können die beiden Antriebe 18, 20 sich von den Betriebspunkten entfernen, welche mit Hilfe der virtuellen Soll-Drehzahlen 38, 40 gesetzt wurden. Das heißt, dass das gewünschte Leistungsverhältnis, welches durch die Effizienzstrategie 32 bestimmt wurde, unter Umständen nicht eingehalten werden kann. Allerdings bleiben die Abweichungen gering, sodass die Anordnung 10 dennoch nahe dem Wirkungsgradoptimum betrieben werden kann.

Ferner wird bei einer Neufestlegung der Soll-Drehzahl 28 mit Hilfe der Effizienzstrategie 32 das richtige Leistungsverhältnis erneut eingestellt, sodass bei häufigen Soll-Drehzahlwechseln die Abweichung von dem gewünschten Leistungsverhältnis akzeptiert werden kann. Alternativ oder ergänzend hierzu kann auch vorgesehen sein, dass in einem bestimmten Intervall die Soll-Drehzahl 28 erneut gesetzt wird, obwohl keine Änderung der Soll-Drehzahl durch das Motorsteuergerät vorgesehen ist.

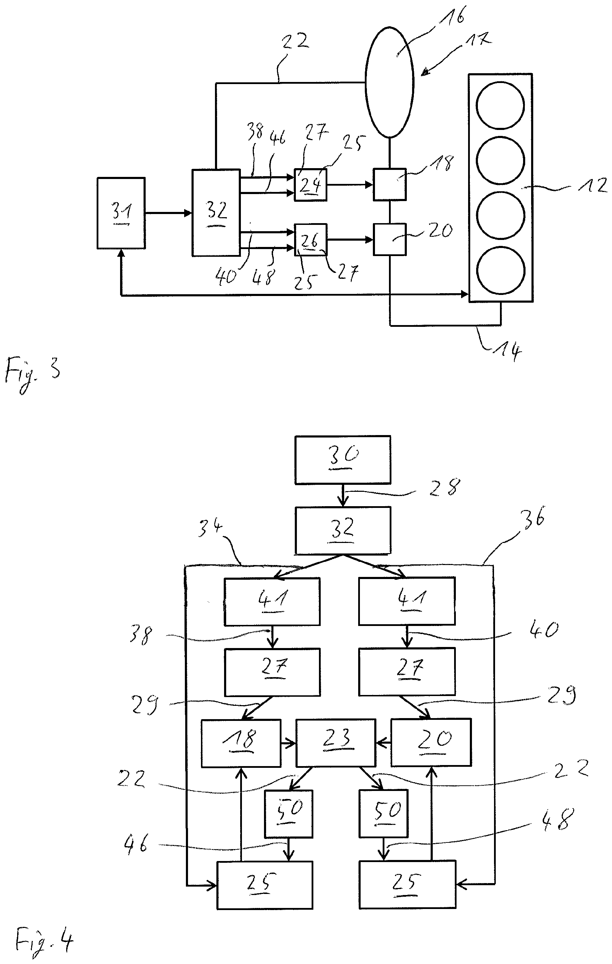

Eine in den Fig. 3 und Fig. 4 dargestellte zweite Ausführungsform des Verfahrens zur Regelung der Drehzahl 22 des Lüfterrades 17 unterscheidet sich von der in der Fig. 1 und Fig. 2 dargestellten ersten Ausführungsform des Verfahrens dadurch, dass die Regelabweichung 44 innerhalb der Regeleinheiten 24, 26 aus einer Differenz zwischen den virtuellen Soll-Drehzahlen 38, 40 und virtuellen Ist-Drehzahlen 46 und 48 bestimmt wird. Dazu wird die Drehzahl 22 des Lüfterrades 17 umgerechnet in eine erste virtuelle Ist-Drehzahl 46 und in eine zweite virtuelle Ist-Drehzahl 48. Die erste virtuelle Ist-Drehzahl 46 wird dabei der ersten Regeleinheit 24 zugeführt und die zweite virtuelle Ist-Drehzahl 48 wird der zweiten Regeleinheit 26 zugeführt.

Die Regelabweichung 44 wird dann in üblicher Weise in den Regeleinheiten 24, 26 durch Differenz zwischen der virtuellen Soll-Drehzahl und der virtuellen Ist-Drehzahl bestimmt. Auf diese Weise werden für die beiden Regeleinheiten 24, 26 unter Umständen unterschiedliche Regelabweichungen 44 ermittelt.

Zur Bestimmung 50 der virtuellen Ist-Drehzahlen 46, 48 sind grundsätzlich mehrere Möglichkeiten denkbar. Grundsätzlich müssen die virtuellen Ist-Drehzahlen 46, 48 derart aus der Drehzahl 22 des Lüfterrades 17 gebildet werden, dass wenn die Drehzahl 22 des Lüfterrades 17 der Soll-Drehzahl 28 entspricht, die erste virtuelle Ist-Drehzahl 46 der ersten virtuellen Soll-Drehzahl 28 und die zweite virtuelle Ist-Drehzahl 48 der zweiten virtuellen Soll-Drehzahl 40 entsprechen. Dadurch kann sichergestellt werden, dass die beiden Regeleinheiten 24, 26 die Drehzahl 22 des Lüfterrades 17 gemeinsam auf die Soll-Drehzahl 28 regeln.

Eine erste Möglichkeit, die virtuellen Ist-Drehzahlen 46, 48 zu bestimmen, besteht darin, die Differenz zwischen der Soll-Drehzahl 28 und den virtuellen Soll-Drehzahlen 38, 40 von der Drehzahl 22 des Lüfterrades 17 abzuziehen. Wie beispielsweise durch folgende Formel beschrieben:

$$\text{virtuelle Ist-Drehzahl} = \text{Drehzahl} - (\text{Soll-Drehzahl} - \text{virtuelle Soll-Drehzahl})$$

Bei einer weiteren Möglichkeit zur Bestimmung 50 der virtuellen Ist-Drehzahlen 46, 48 wird das gleiche Verhältnis zwischen der Drehzahl 22 und den virtuellen Ist-Drehzahlen 46, 48 eingehalten wie zwischen der Soll-Drehzahl 28 und den virtuellen Soll-Drehzahlen 38, 40. Dieses Verhalten kann beispielsweise durch folgende Formel beschrieben werden:

Virtuelle Ist-Drehzahl = Drehzahl * virtuelle Soll-Drehzahl / Soll-Drehzahl

Beide aufgezählten Varianten ermöglichen es, dass beide Regeleinheiten 24, 26 gemeinsam arbeiten und die Drehzahl 22 des Lüfterrades 17 auf die Soll-Drehzahl 28 regeln. Andere Möglichkeiten zur Bestimmung 50 der virtuellen Ist-Drehzahl 46, 48 sind ebenfalls denkbar, solange die virtuellen Ist-Drehzahlen 46, 48 mit den virtuellen Soll-Drehzahlen 38, 40 übereinstimmen, wenn die Drehzahl 22 mit der Soll-Drehzahl 28 übereinstimmt. Im Übrigen stimmt die in den Fig. 3 und Fig. 4 dargestellte zweite Ausführungsform des Verfahrens hinsichtlich Ablauf und Funktion mit der in den Fig. 1 und Fig. 2 dargestellten ersten Ausführungsform des Verfahrens überein, auf deren vorstehende Beschreibung insoweit Bezug genommen wird.

**Patentansprüche**

1.  Verfahren zur Regelung einer Drehzahl (22) eines gemeinsam durch einen ersten Antrieb (18) und einen zweiten Antrieb (20) angetriebenen Lüfterrades (17) auf eine Soll-Drehzahl (28), wobei der erste Antrieb (18) durch eine erste Regeleinheit (24) geregelt und/oder gesteuert und der zweite Antrieb (20) durch eine zweite Regeleinheit (26) geregelt und/oder gesteuert wird,
    **dadurch gekennzeichnet,**

    - **dass** anhand einer Effizienzstrategie (32) ein von dem ersten Antrieb (18) zu erzeugendes erstes Drehmoment (34) und ein von dem zweiten Antrieb (20) zu erzeugendes zweites Drehmoment (36) bestimmt werden,
    - **dass** jeweils ausgehend von dem ersten Drehmoment (34) und von dem zweiten Drehmoment (36) eine erste virtuelle Soll-Drehzahl (38) und eine zweite virtuelle Soll-Drehzahl (40) bestimmt werden,
    - **dass** die erste virtuelle Soll-Drehzahl (38) der ersten Regeleinheit (24) als eine Eingangsgröße zugeführt wird und
    - **dass** die zweite virtuelle Soll-Drehzahl (40) der zweiten Regeleinheit (26) als eine Eingangsgröße zugeführt wird.

2.  Verfahren nach Anspruch 1,
    **dadurch gekennzeichnet,**
    **dass** ein Elektromotor als erster Antrieb (18) und eine Visco-Kupplung als zweiter Antrieb (20) verwendet werden, welche das Lüfterrad (17) an eine Welle (14) einer Brennkraftmaschine (12) koppelt.

3.  Verfahren nach Anspruch 1 oder 2,
    **dadurch gekennzeichnet,**
    **dass** die von dem ersten Antrieb (18) und von dem zweiten Antrieb (20) zu erzeugenden Drehmomente (34, 36) durch die Effizienzstrategie (32) anhand einer Soll-Drehzahl (28) des Lüfterrades (17) und/oder einer Drehzahl der Brennkraftmaschine (12) bestimmt werden.

4.  Verfahren nach einem der Ansprüche 1 bis 3,
    **dadurch gekennzeichnet,**
    **dass** die von dem ersten Antrieb (18) und von dem zweiten Antrieb (20) zu erzeugenden Drehmomente (34, 36) durch die Effizienzstrategie (32) unter Berücksichtigung der Wirkungsgrade des ersten Antriebs (18) und des zweiten Antriebs (20) bestimmt werden.

5.  Verfahren nach einem der Ansprüche 1 bis 4,
    **dadurch gekennzeichnet,**
    **dass** die erste virtuelle Soll-Drehzahl (38) und die zweite virtuelle Soll-Drehzahl (40) mit Hilfe einer Drehzahl-Drehmoment-Kennlinie (41) des Lüfterrades (17) aus dem ersten Drehmoment (34) bzw. dem zweiten Drehmoment (36) bestimmt werden.

6.  Verfahren nach einem der Ansprüche 1 bis 5,
    **dadurch gekennzeichnet,**
    **dass** die erste Regeleinheit (24) und die zweite Regeleinheit (26) jeweils ein Vorsteuerkennfeld (27) und einen PID-Regler (25) verwenden.

**7.** Verfahren nach Anspruch 6,
**dadurch gekennzeichnet,**
**dass** die erste virtuelle Soll-Drehzahl (38) als Eingangsgröße für das Vorsteuerkennfeld (27) der ersten Regeleinheit (24) des ersten Antriebs (18) verwendet wird, und dass die zweite virtuelle Soll-Drehzahl (40) als Eingangsgröße für das Vorsteuerkennfeld (27) der zweiten Regeleinheit (26) des zweiten Antriebs (20) verwendet wird.

**8.** Verfahren nach Anspruch 6 oder 7,
**dadurch gekennzeichnet,**
**dass** die Regelabweichung (44), welche von den PID-Reglern (25) verwendet wird, aus einer Differenz zwischen der Drehzahl (22) des Lüfterrades (17) und der Soll-Drehzahl (28) des Lüfterrades (17) bestimmt wird.

**9.** Verfahren nach Anspruch 6 oder 7,
**dadurch gekennzeichnet,**
**dass** die jeweiligen Regelabweichungen (44), welche von den PID-Reglern (25) verwendet werden, aus einer Differenz zwischen der jeweiligen virtuellen Soll-Drehzahl (38, 40) und einer jeweiligen virtuellen Ist-Drehzahlen (46, 48) bestimmt werden.

**10.** Verfahren nach Anspruch 9,
**dadurch gekennzeichnet,**

- **dass** die jeweiligen virtuellen Ist-Drehzahlen (46, 48) durch Subtraktion eines Offsets von der Drehzahl (22) bestimmt werden, wobei der Offset die Differenz zwischen der Soll-Drehzahl (28) und der jeweiligen virtuellen Soll-Drehzahl (38, 40) ist, oder
- **dass** die virtuellen Ist-Drehzahlen (46, 48) durch Multiplikation der Drehzahl (22) mit einem Teilungsfaktor bestimmt werden, wobei der Teilungsfaktor der Quotient aus der jeweiligen virtuellen Soll-Drehzahl (38, 40) durch die Soll-Drehzahl (28) ist.

**11.** Verfahren nach einem der Ansprüche 1 bis 10,
**dadurch gekennzeichnet,**
**dass** die erste Regeleinheit (24) und die zweite Regeleinheit (26) Drehzahlregeleinheiten sind.

**12.** Verfahren nach einem der Ansprüche 1 bis 11,
**dadurch gekennzeichnet,**
**dass** die Drehzahlen des ersten Antriebs und des zweiten Antriebs gekoppelt sind.

**13.** Kraftfahrzeug mit einem Lüfter (16), der durch einen ersten Antrieb (18) und durch einen zweiten Antrieb (20) angetrieben ist, wobei eine Drehzahl (22) des Lüfterrades (17) des Lüfters (16) durch ein Verfahren nach einem der Ansprüche 1 bis 12 geregelt ist.

**14.** Kraftfahrzeug nach Anspruch 13,
**dadurch gekennzeichnet,**
**dass** der erste Antrieb (18) ein Elektromotor ist und der zweite Antrieb (20) eine Visco-Kupplung ist, welche das Lüfterrad (17) an eine Brennkraftmaschine (12) des Kraftfahrzeugs koppelt.

**Claims**

**1.** Method for regulating a rotational speed (22) of a fan wheel (17) to a target rotational speed (28), said fan wheel being driven jointly by a first drive (18) and a second drive (20), wherein the first drive (18) is regulated and/or controlled by a first regulating unit (24) and the second drive (20) is regulated and/or controlled by a second regulating unit (26),
**characterised in that**

- a first torque (34) to be generated by the first drive (18) and a second torque (36) to be generated by the second drive (20) are determined based on an efficiency strategy (32),
- a first virtual target rotational speed (38) and a second virtual target rotational speed (40) are determined starting from the first torque (34) and the second torque (36),
- the first virtual target rotational speed (38) is supplied to the first regulating unit (24) as an input variable, and

- the second virtual target rotational speed (40) is supplied to the second regulating unit (26) as an input variable.

2. Method according to claim 1,
   **characterised in that**
   an electric motor is used as a first drive (18) and a viscous coupling as a second drive (20) which couples the fan wheel (17) to a shaft (14) of an internal combustion engine (12).

3. Method according to claim 1 or 2,
   **characterised in that**
   the torques (34, 36) to be generated by the first drive (18) and by the second drive (20) are determined by the efficiency strategy (32) based on a target rotational speed (28) of the fan wheel (17) and/or a rotational speed of the internal combustion engine (12).

4. Method according to any one of claims 1 to 3,
   **characterised in that**
   the torques (34, 36) to be generated by the first drive (18) and by the second drive (20) are determined by the efficiency strategy (32) taking into account the efficiency level of the first drive (18) and of the second drive (20).

5. Method according to any one of claims 1 to 4,
   **characterised in that**
   the first virtual rotational speed (38) and the second virtual target rotational speed (40) are determined, using a speed-torque characteristic curve (41) of the fan wheel (17), from the first torque (34) and the second torque (36).

6. Method according to any one of claims 1 to 5,
   **characterised in that**
   the first regulating unit (24) and the second regulating unit (26) respectively use a pilot control characteristic diagram (27) and a PID controller (25).

7. Method according to claim 6,
   **characterised in that**
   the first virtual target rotational speed (38) is used as the input variable for the pilot control characteristic diagram (27) of the first regulating unit (24) of the first drive (18), and the second virtual target rotational speed (40) is used as the input variable for the pilot control characteristic diagram (27) of the second regulating unit (26) of the second drive (20).

8. Method according to claim 6 or 7,
   **characterised in that**
   the control deviation (44) used by the PID controllers (25) is determined from a difference between the rotational speed (22) of the fan wheel (17) and the target rotational speed (28) of the fan wheel (17).

9. Method according to claim 6 or 7,
   **characterised in that**
   the respective control deviations (44) used by the PID controllers (25) are determined from a difference between the respective virtual target rotational speed (38, 40) and a respective virtual actual rotational speed (46, 48).

10. Method according to claim 9,
    **characterised in that**

    - the respective virtual actual rotational speeds (46, 48) are determined by subtraction of an offset from the rotational speed (22), wherein the offset is the difference between the target rotational speed (28) and the respective virtual target rotational speed (38, 40).
    - the virtual actual rotational speeds (46, 48) are determined by multiplication of the rotational speed (22) with a division factor, wherein the division factor is the quotient of the respective virtual target rotational speed (38, 40) by the target rotational speed (28).

11. Method according to any one of claims 1 to 10,
    **characterised in that**
    the first regulating unit (24) and the second regulating unit (26) are rotational speed regulating units.

**12.** Method according to any one of claims 1 to 11,
**characterised in that**
the rotational speeds of the first drive and of the second drive are coupled.

**13.** Motor vehicle with a fan (16) driven jointly by a first drive (18) and by a second drive (20), wherein a rotational speed (22) of the fan wheel (17) of the fan (16) is regulated by a method according to any one of claims 1 to 12.

**14.** Method according to claim 13,
**characterised in that**
the first drive (18) is an electric motor and the second drive (20) is a viscous coupling which couples the fan wheel (17) to an internal combustion engine (12) of the motor vehicle.


**Revendications**

**1.** Procédé de réglage d'une vitesse de rotation (22) d'une hélice (17), entraînée conjointement par un premier entraînement (18) et par un deuxième entraînement (20), sur une vitesse de rotation de consigne (28), dans lequel le premier entraînement (18) est réglé et/ou commandé par une première unité de réglage (24) et le deuxième entraînement (20) est réglé et/ou commandé par une deuxième unité de réglage (26),
**caractérisé en ce que**

- à l'aide d'une stratégie d'efficacité (32), on détermine un premier moment de couple (34) devant être produit par le premier entraînement (18) et un deuxième moment de couple (36) devant être produit par le deuxième entraînement (20),
- à chaque fois, à partir du premier moment de couple (34) et du deuxième moment de couple (36), on détermine une première vitesse de rotation de consigne virtuelle (38) et une deuxième vitesse de rotation de consigne virtuelle (40),
- on envoie comme grandeur d'entrée à la première unité de réglage (24) la première vitesse de rotation de consigne virtuelle (38) et
- on envoie comme grandeur d'entrée à la deuxième unité de réglage (26) la deuxième vitesse de rotation de consigne virtuelle (40).

**2.** Procédé selon la revendication 1, **caractérisé en ce qu'**on utilise un moteur électrique comme premier entraînement (18) et un embrayage viscostatique comme deuxième entraînement (20), ce dernier couplant l'hélice (17) à un arbre (14) d'un moteur à combustion interne (12).

**3.** Procédé selon la revendication 1 ou 2, **caractérisé en ce que** les moments de couple (34, 36) devant être produits par le premier entraînement (18) et par le deuxième entraînement (20) sont déterminés par la stratégie d'efficacité (32) à l'aide d'une vitesse de rotation de consigne (28) de l'hélice (17) et/ou d'une vitesse de rotation du moteur à combustion interne (12).

**4.** Procédé selon l'une des revendications 1 à 3, **caractérisé en ce que** les moments de couple (34, 36) devant être produits par le premier entraînement (18) et par le deuxième entraînement (20) sont déterminés par la stratégie d'efficacité (32) en tenant compte des rendements du premier entraînement (18) et du deuxième entraînement (20).

**5.** Procédé selon l'une des revendications 1 à 4, **caractérisé en ce que** la première vitesse de rotation de consigne virtuelle (38) et la deuxième vitesse de rotation de consigne virtuelle (40) sont déterminées à l'aide d'une courbe caractéristique vitesse de rotation - moment de couple (41) de l'hélice (17) à partir du premier moment de couple (34) ou du deuxième moment de couple (36).

**6.** Procédé selon l'une des revendications 1 à 5, **caractérisé en ce que** la première unité de réglage (24) et la deuxième unité de réglage (26) utilisent à chaque fois un champ de caractéristiques pilote (27) et un régulateur PID (25).

**7.** Procédé selon la revendication 6, **caractérisé en ce que** la première vitesse de rotation de consigne virtuelle (38) est utilisée comme grandeur d'entrée pour le champ de caractéristiques pilote (27) de la première unité de réglage (24) du premier entraînement (18) et **en ce que** la deuxième vitesse de rotation de consigne virtuelle (40) est utilisée comme grandeur d'entrée pour le champ de caractéristiques pilote (27) de la deuxième unité de réglage (26) du deuxième entraînement (20).

**8.** Procédé selon la revendication 6 ou 7, **caractérisé en ce que** l'écart de réglage (44) qui est utilisé par les régulateurs PID (25) est déterminé à partir d'une différence entre la vitesse de rotation (22) de l'hélice (17) et la vitesse de rotation de consigne (28) de l'hélice (17).

**9.** Procédé selon la revendication 6 ou 7, **caractérisé en ce que** les écarts de réglage respectifs (44) qui sont utilisés par les régulateurs PID (25) sont déterminés à partir d'une différence entre la vitesse de rotation de consigne virtuelle respective (38, 40) et une vitesse de rotation réelle virtuelle respective (46, 48).

**10.** Procédé selon la revendication 9, **caractérisé en ce que**

- les vitesses de rotation réelles virtuelles respectives (46, 48) sont déterminées en soustrayant un décalage de la vitesse de rotation (22), le décalage étant la différence entre la vitesse de rotation de consigne (28) et la vitesse de rotation de consigne virtuelle respective (38, 40), ou
- les vitesses de rotation réelles virtuelles (46, 48) sont déterminées en multipliant la vitesse de rotation (22) par un facteur de division, le facteur de division étant le quotient de la vitesse de rotation de consigne virtuelle respective (38, 40) et de la vitesse de rotation de consigne (28).

**11.** Procédé selon l'une des revendications 1 à 10, **caractérisé en ce que** la première unité de réglage (24) et la deuxième unité de réglage (26) sont des unités de réglage de vitesse de rotation.

**12.** Procédé selon l'une des revendications 1 à 11, **caractérisé en ce que** les vitesses de rotation du premier entraînement et du deuxième entraînement sont couplées.

**13.** Véhicule automobile avec un ventilateur (16) qui est entraîné par un premier entraînement (18) et par un deuxième entraînement (20), dans lequel une vitesse de rotation (22) de l'hélice (17) du ventilateur (16) est réglée par un procédé selon l'une des revendications 1 à 12.

**14.** Véhicule automobile selon la revendication 13, **caractérisé en ce que** le premier entraînement (18) est un moteur électrique et le deuxième entraînement (20) est un embrayage viscostatique qui couple l'hélice (17) à un moteur à combustion interne (12) du véhicule automobile.

Fig. 1

Fig. 2

Fig. 3

Fig. 4

**EP 3 048 307 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219872 A1